# FASCICULE DE BREVET EUROPEEN

(11) **EP 3 341 314 B1**
(45) Date de publication et mention de la délivrance du brevet: **11.03.2020**
(21) Numéro de dépôt: 16766999.3
(22) Date de dépôt: 26.08.2016
(51) Int. Cl.: B65H 75/48, H02G 11/02, H02G 3/08

(54) **CASSETTE A RESSORT POUR UN ENROULEUR DE CABLE OU DE TUYAU**
FEDERKASSETTE FÜR EINEN KABEL- ODER ROHRWICKLER
SPRING CASSETTE FOR A CABLE OR TUBE WINDER

(30) Priorité: 27.08.2015 FR 1557964
(43) Date de publication de la demande: 04.07.2018
(73) Titulaire: Conductix Wampfler France, 92700 Colombes (FR)
(72) Inventeur: BERGER, Jean-Michel, 01300 BRENS (FR); PARSEIHIAN, Bruno, 01300 Magnieu (FR)
(74) Mandataire: Regimbeau
(86) Numéro de dépôt international: PCT/FR2016/052131
(87) Numéro de publication internationale: WO 2017/032956

(56) Documents cités:
- EP-A1- 1 467 457
- US-A- 3 040 139

## Description

### DOMAINE DE L'INVENTION

La présente invention concerne une cassette à ressort pour un enrouleur de câble ou de tuyau, ainsi qu'un enrouleur comprenant au moins une telle cassette.

### ARRIERE PLAN DE L'INVENTION

Un enrouleur de câble ou de tuyau à envidage automatique comprend au moins un ressort spiralé exerçant une force de rappel sur le câble ou le tuyau de sorte à enrouler ledit câble ou tuyau sur le tambour de l'enrouleur.

Un tel ressort spiralé est dangereux à manipuler car il tend à revenir vers la forme d'une bande plane ce qui, en raison de sa dimension, peut occasionner des blessures d'un opérateur lors de sa manipulation.

Pour éviter un tel risque, le document EP 0 802 601 propose une cassette contenant ledit ressort.

Une telle cassette comprend deux disques parallèles maintenus à distance l'un de l'autre par une pluralité d'entretoises agencées à intervalles réguliers sous la forme d'une couronne dans une partie périphérique desdits disques. Les disques sont en outre rendus solidaires l'un de l'autre par une pluralité de vis s'étendant au travers desdites entretoises. Le ressort est enfermé entre les deux disques, à l'intérieur de la couronne d'entretoises, sous la forme d'une spirale dont l'axe est perpendiculaire auxdits disques. Lesdites entretoises servent également à fixer la cassette à l'enrouleur.

L'enrouleur comprend un arbre fixe et un tambour agencé en rotation autour de l'arbre, le câble ou tuyau étant enroulé sur la surface circonférentielle du tambour.

Le ressort spiralé est fixé à l'arbre par sa spire intérieure et au tambour par sa spire extérieure.

Lorsque l'enrouleur doit être démonté, l'opérateur manipule uniquement la cassette sans accéder au ressort lui-même.

Il est ainsi possible de retirer une cassette de l'enrouleur pour la remplacer et/ou pour la remettre en place dans un sens opposé pour changer le sens d'envidage.

Dans certains cas, il peut être nécessaire de lier plusieurs cassettes entre elles en parallèle ou en série.

Dans une liaison en parallèle, il s'agit de relier les spires intérieures des ressorts entre elles et les spires extérieures des ressorts entre elles. Ceci permet de multiplier par le nombre de cassettes l'effort de l'enrouleur pour une même course.

Dans une liaison en série, il s'agit de relier la spire extérieure d'un ressort à la spire intérieure d'un ressort adjacent. Ceci permet de multiplier par le nombre de cassettes la course de l'enrouleur pour un même effort.

Pour permettre cette liaison, il est nécessaire d'utiliser une pièce d'adaptation qui s'étend sur sensiblement toute la surface de la cassette pour permettre de relier la spire intérieure d'un ressort à la spire extérieure d'un ressort adjacent. Une telle pièce d'adaptation est donc encombrante. Le brevet US 3,040,139 décrit une cassette à ressort munie d'une telle pièce.

D'autre part, il est nécessaire de prévoir dans l'enrouleur un espace libre pour permettre d'effectuer une telle liaison. Pour ne pas grever l'encombrement de l'enrouleur, cela conduit à réduire l'espace accordé au ressort.

Or, pour assurer un taux de travail optimal du ressort, il est souhaitable d'utiliser un volume de ressort le plus grand possible. Le ressort est ainsi plus fiable à capacité égale.

### BREVE DESCRIPTION DE L'INVENTION

Un but de l'invention est de concevoir une cassette à ressort permettant de lier entre elles plusieurs cassettes de manière simple tout en minimisant l'espace nécessaire dans l'enrouleur.

Conformément à l'invention, il est proposé une cassette à ressort telle que décrite dans la revendication 1 et comprenant :
- deux disques parallèles solidaires l'un de l'autre par leur périphérie,
- un ressort spiralé maintenu entre lesdits disques, la spire extérieure dudit ressort étant solidaire de la périphérie desdits disques,
   ladite cassette étant caractérisée en ce que chacun desdits disques présente, dans une partie centrale, au moins deux protrusions s'étendant vers l'extérieur de la cassette.

Selon un mode de réalisation, les disques sont en tôle et en ce que lesdites protrusions sont formées par emboutissage de la tôle.

De manière avantageuse, la partie centrale de chacun desdits disques comprend au moins trois protrusions avec un intervalle identique entre des protrusions adjacentes.

De préférence, la distance entre le centre de chaque disque et chacune des protrusions respectives est inférieure ou égale à la moitié du rayon dudit disque.

Selon un mode de réalisation, les deux disques sont identiques.

Un autre objet concerne un procédé de fabrication d'une telle cassette à ressort. Ce procédé se caractérise en ce qu'il comprend la fourniture de deux disques et la réalisation des protrusions dans lesdits disques par emboutissage.

Un autre objet concerne un enrouleur de câble (électrique ou mécanique) ou de tuyau comprenant au moins une telle cassette à ressort.

Selon un mode de réalisation, ledit enrouleur comprend au moins deux cassettes à ressort reliées en parallèle au moyen d'une pluralité d'éléments de liaison reliant rigidement les protrusions d'un disque d'une première cassette en vis-à-vis d'un disque d'une seconde cassette adjacente à la première.

Selon un autre mode de réalisation, ledit enrouleur comprend au moins deux cassettes à ressort reliées en série au moyen d'un organe de liaison solidaire d'une part des protrusions agencées dans la partie centrale d'un disque d'une cassette et d'autre part de la spire intérieure d'un ressort d'une cassette adjacente.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue en perspective d'une cassette selon un mode de réalisation de l'invention,
- la figure 2 est une vue en perspective d'un disque d'une telle cassette,
- la figure 3 est une vue éclatée en perspective de l'assemblage de deux cassettes en série selon un mode de réalisation de l'invention,
- la figure 4 est une vue éclatée en perspective de l'assemblage de deux cassettes en parallèle selon un mode de réalisation de l'invention,
- la figure 5 est une vue en perspective d'un enrouleur partiellement coupé, montrant une pluralité de cassettes reliées entre elles selon un mode de réalisation de l'invention.

### DESCRIPTION DETAILLEE DE L'INVENTION

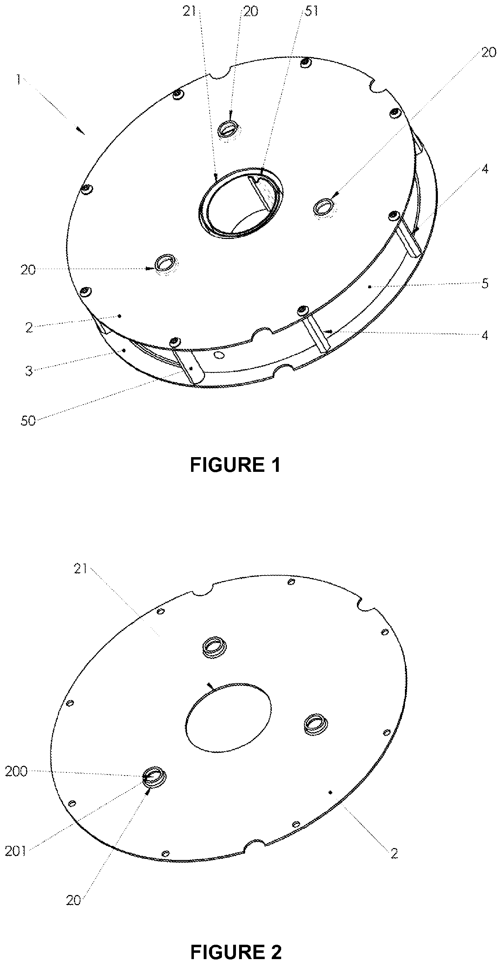

La figure 1 illustre en perspective une cassette à ressort selon un mode de réalisation de l'invention.

De manière connue en elle-même, la cassette 1 comprend deux disques parallèles 2, 3 maintenus rigidement à distance l'un de l'autre par leur périphérie.

Lesdits disques sont généralement métalliques.

Dans la forme d'exécution illustrée sur la figure 1, la liaison entre les deux disques 2, 3 est réalisée par une pluralité d'entretoises 4 agencées en couronne à la périphérie des deux disques. Toutefois, ce mode de réalisation n'est pas limitatif et l'homme du métier pourrait choisir tout autre moyen approprié pour relier les deux disques par leur périphérie sans pour autant sortir du cadre de la présente invention. Toute technique d'assemblage (soudure, vissage, sertissage, etc.) adaptée peut être utilisée.

La cassette comprend par ailleurs un ressort 5 enroulé sur lui-même pour former une spirale dont l'axe est parallèle à l'axe de symétrie des deux disques 2, 3.

Les deux disques définissent entre eux un logement dans lequel le ressort spiralé est agencé.

La spire extérieure du ressort est rigidement liée à la périphérie des disques. Par exemple, dans le mode de réalisation de la figure 1 où les deux disques sont reliés par des entretoises, la spire extérieure du ressort peut être fixée à l'une des entretoises par son extrémité 50 enroulée autour de l'entretoise. L'homme du métier est en mesure de concevoir une liaison adaptée entre la spire extérieure du ressort et les disques en fonction des moyens utilisés pour relier lesdits disques.

La spire intérieure du ressort est destinée à être accrochée à un arbre de l'enrouleur (non illustré sur la figure 1). A cet effet, l'extrémité 51 de la spire intérieure peut être recourbée pour permettre sa solidarisation à l'arbre.

Chaque disque présente une ouverture centrale 21 qui permet l'accès à la spire intérieure du ressort.

L'invention propose par ailleurs de fournir sur la face extérieure de chaque disque au moins deux protrusions (trois protrusions 20 sont représentées sur la figure 1) dans une partie centrale des disques.

Comme on le verra plus bas, lesdites protrusions forment un moyen de liaison de deux cassettes entre elles, aussi bien en série qu'en parallèle.

Lesdites protrusions se trouvent à la même distance du centre du disque.

Les protrusions sont avantageusement circulaires, même si toute autre forme peut être envisagée.

Les protrusions peuvent être pleines, réalisées par exemple par soudure de plots cylindriques sur la face extérieure des disques.

De manière alternative, dans le mode de réalisation illustré sur la figure 2, qui représente une vue en perspective du disque 2 de la cassette de la figure 1, les protrusions 20 sont formées par emboutissage du disque 2. Ledit emboutissage conduit à former un trou circulaire 200 muni d'un rebord périphérique 201 en saillie vis-à-vis de la surface du disque et qui forme ainsi la protrusion correspondante. Ce mode de réalisation des protrusions est particulièrement avantageux car réalisable aisément et économiquement à l'échelle industrielle.

Bien que non entièrement visible sur la figure 1, le disque 3 est avantageusement identique au disque 2. Cette forme d'exécution présente l'avantage de la réversibilité de la cassette, qui permet de modifier le sens d'enroulement en inversant simplement la position de la cassette dans l'enrouleur, sans modifier les autres composants de l'enrouleur. Ceci permet de gérer une unique version du produit, ce qui simplifie la fabrication et la distribution.

Quel que soit le mode de réalisation des protrusions, leur hauteur est de l'ordre de quelques millimètres, typiquement entre 3 et 10 mm.

Le diamètre des protrusions (ou leur plus grande dimension lorsque celles-ci ne sont pas circulaires) est généralement compris entre 10 et 30 mm.

Les protrusions sont avantageusement positionnées le plus près possible du centre des disques, de préférence à une distance inférieure ou égale à la moitié du rayon des disques. Comme on le verra plus bas, cet agencement minimise l'encombrement nécessaire à la liaison entre cassettes.

Les protrusions sont au nombre d'au moins deux pour éviter des effets d'arc-boutement lorsque l'on lie deux cassettes entre elles. Dans le cas de deux protrusions, celles-ci sont avantageusement diamétralement opposées.

De manière préférée, chaque disque présente au moins trois protrusions réparties selon un intervalle identique entre deux protrusions adjacentes. Ceci permet de mieux répartir les efforts entre les cassettes reliées entre elles par les protrusions.

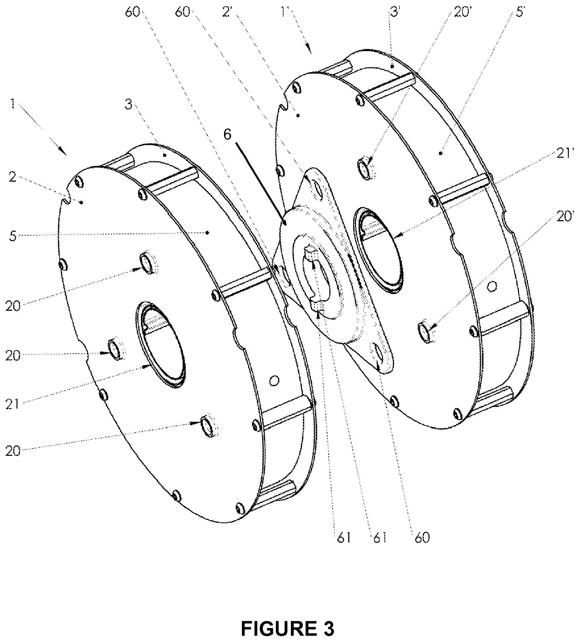

La figure 3 est une vue éclatée en perspective de l'assemblage de deux cassettes en série. Sur cette figure, chacune de ces deux cassettes 1, 1' est identique à celle de la figure 1. Les éléments désignés par un repère suivi d'un ' sont identiques aux éléments désignés par le même repère sur la figure 1.

Les deux cassettes 1, 1' sont rigidement liées par un organe de liaison 6 positionné entre les disques en vis-à-vis des deux cassettes (ici, le disque 3 de la cassette 1 et le disque 2' de la cassette 1').

L'organe de liaison comprend d'une part une région périphérique présentant des moyens de fixation sur les protrusions de l'une des cassettes et d'autre part une région centrale présentant des moyens de solidarisation à la spire intérieure de l'autre bobine.

Dans le mode de réalisation illustré sur la figure 3, l'organe de liaison 6 se présente sous la forme d'une bride présentant des orifices traversants 60 adaptés pour s'engager sur les protrusions 20' de la cassette 1' et des ergots 61 adaptés pour s'engager dans la spire intérieure du ressort 5 de la cassette 1.

Ainsi, on relie la spire intérieure du ressort de la cassette 1 et la spire extérieure du ressort de la cassette 1'.

Un avantage de l'organe de liaison 6 est qu'il présente un encombrement limité, cet encombrement étant d'autant plus faible que les protrusions sont proches du centre du disque. En particulier, cet organe de liaison 6 est sensiblement plus petit que s'il fallait relier la spire intérieure de l'une des cassettes à la périphérie de la cassette adjacente. Par conséquent, il n'est pas nécessaire de prévoir un espace au-dessus du ressort dans le logement défini par les disques. On maximise ainsi l'espace disponible pour le ressort, maximisant ainsi sa course et/ou son effort.

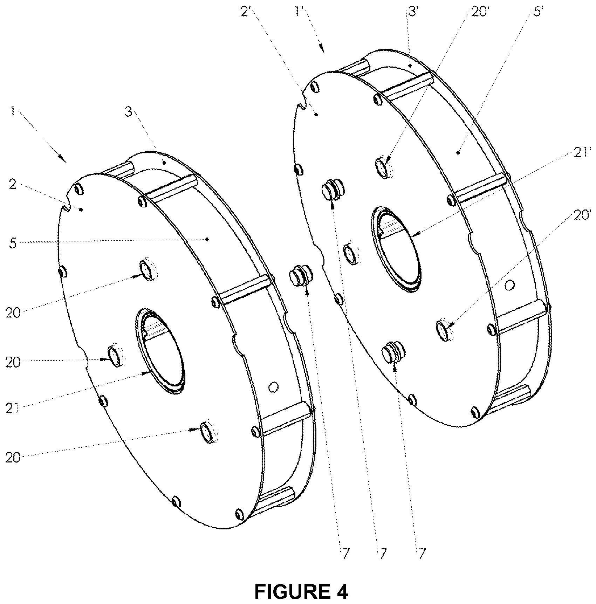

La figure 4 est une vue éclatée en perspective de l'assemblage de deux cassettes en parallèle. Sur cette figure, chacune de ces deux cassettes 1, 1' est identique à celle de la figure 1. Les éléments désignés par un repère suivi d'un ' sont identiques aux éléments désignés par le même repère sur la figure 1.

Les deux cassettes 1, 1' sont rigidement liées par au moins un organe de liaison 7 positionné entre les disques en vis-à-vis des deux cassettes (ici, le disque 3 de la cassette 1 et le disque 2' de la cassette 2') et qui relie rigidement chaque protrusion d'un disque avec une protrusion respective du disque en vis-à-vis.

Dans le mode de réalisation illustré sur la figure 4, l'organe de liaison 7 présente la forme d'un doigt généralement cylindrique dont les deux extrémités sont adaptées pour s'emmancher dans une protrusion respective. L'élément présente dans sa partie médiane une collerette destinée à s'appuyer sur chaque protrusion lorsque les cassettes sont assemblées.

Toutefois, cette forme d'exécution n'est pas limitative et l'on pourrait relier les protrusions par tout autre moyen approprié. Par exemple, dans le cas où la protrusion ne présente pas d'ouverture traversante, l'organe de liaison pourrait être emmanché à l'extérieur de ladite protrusion.

On notera que cette solution de liaison des deux cassettes est particulièrement compacte et simple à mettre en oeuvre.

Bien que les figures 3 et 4 illustrent deux cassettes reliées entre elles, il va de soi que l'invention peut être mise en oeuvre avec un nombre quelconque de cassettes, chaque cassette étant liée à la cassette adjacente par un organe de liaison 6 ou 7.

Par ailleurs, les protrusions permettent également de fixer la cassette dans l'enrouleur.

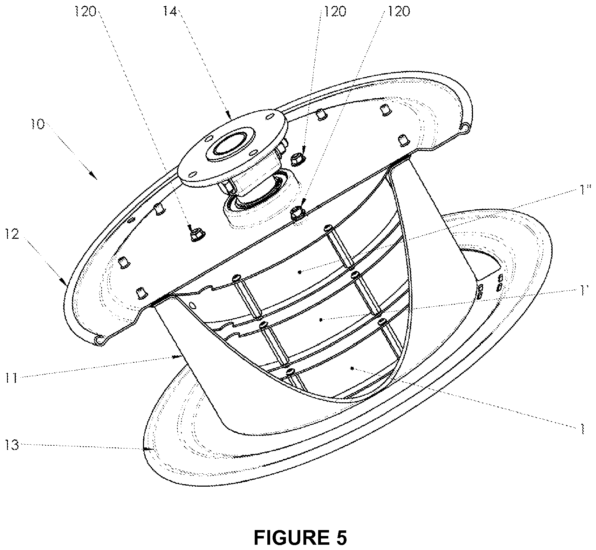

La figure 5 illustre trois cassettes 1, 1', 1" du type de celle de la figure 1 dans un enrouleur 10.

Ledit enrouleur comprend un arbre 14 et un tambour agencé en rotation autour de l'arbre, le câble ou tuyau (non illustré) étant enroulé sur la surface circonférentielle 11 du tambour et maintenu entre les flasques 12, 13.

La cassette située au voisinage d'un flasque 12 ou 13 est rigidement liée à celui-ci par des vis 120 passant au travers des ouvertures traversantes des protrusions. D'autre part, l'arbre 14 s'engage dans la spire intérieure du ressort de ladite cassette.

Ce mode de réalisation de l'enrouleur n'est pas limitatif : notamment, la ou les cassettes peuvent être agencées dans une autre partie de l'enrouleur que le tambour.

L'invention trouve application dans les enrouleurs de câble mécanique, de câble électrique, ou encore de tuyau.

## Revendications

1. Cassette à ressort (1) comprenant :
- deux disques (2, 3) parallèles solidaires l'un de l'autre par leur périphérie,
- un ressort spiralé (5) maintenu entre lesdits disques (2, 3), la spire extérieure dudit ressort (5) étant solidaire de la périphérie desdits disques,
**caractérisée en ce que** chacun desdits disques (2, 3) présente, dans une partie centrale, au moins deux protrusions (20) s'étendant vers l'extérieur de la cassette, les protrusions (20) d'un disque (2, 3) de la cassette à ressort (1) étant configurées pour être emmanchées à au moins une pièce de liaison (6, 7) permettant de relier entre elles ladite cassette à ressort (1) et une autre cassette à ressort (1') identique.

2. Cassette selon la revendication 1, **caractérisée en ce que** lesdits disques (2, 3) sont en tôle et **en ce que** lesdites protrusions (20) sont formées par emboutissage de la tôle.

3. Cassette selon l'une des revendications 1 ou 2, **caractérisée en ce que** la partie centrale de chacun desdits disques (2, 3) comprend au moins trois protrusions (20) avec un intervalle identique entre des protrusions adjacentes.

4. Cassette selon l'une des revendications 1 à 3, **caractérisée en ce que** la distance entre le centre de chaque disque et chacune des protrusions respectives est inférieure ou égale à la moitié du rayon dudit disque.

5. Cassette selon l'une des revendications 1 à 4, **caractérisée en ce que** les deux disques sont identiques.

6. Procédé de fabrication d'une cassette à ressort selon l'une des revendications 1 à 5, **caractérisé en ce qu'**il comprend la fourniture de deux disques (2, 3) et la réalisation des protrusions dans lesdits disques par emboutissage.

7. Enrouleur de câble ou de tuyau à ressort, **caractérisé en ce qu'**il comprend au moins une cassette à ressort (1) selon l'une des revendications 1 à 5.

8. Enrouleur selon la revendication 7, **caractérisé en ce qu'**il comprend au moins deux cassettes à ressort (1, 1') reliées en parallèle au moyen d'une pluralité d'organes de liaison (7) reliant rigidement les protrusions d'un disque d'une première cassette en vis-à-vis d'un disque d'une seconde cassette adjacente à la première.

9. Enrouleur selon la revendication 7, **caractérisé en ce qu'**il comprend au moins deux cassettes à ressort (1, 1') reliées en série au moyen d'un organe de liaison (6) solidaire d'une part des protrusions agencées dans la partie centrale d'un disque d'une cassette et d'autre part de la spire intérieure d'un ressort d'une cassette adjacente.

## Patentansprüche

1. Federkassette (1), umfassend:
- zwei parallele Scheiben (2, 3), die miteinander durch ihre Peripherie fest verbunden sind;
- eine spiralförmige Feder (5), die zwischen den genannten Scheiben (2, 3) festgehalten ist, wobei die äußere Windung der genannten Feder (5) mit der Peripherie der genannten Scheiben fest verbunden ist,
**dadurch gekennzeichnet, dass** jede der genannten Scheiben (2, 3) in einem zentralen Teil wenigstens zwei Vorsprünge (20) aufweist, die sich zur Außenseite der Kassette erstrecken, wobei die Vorsprünge (20) einer Scheibe (2, 3) der Federkassette (1) ausgestaltet sind, um in wenigstens ein Verbindungsstück (6, 7) eingepasst zu sein, das das Verbinden der genannten Federkassette (1) und einer anderen, identischen Federkassette (1') miteinander zulässt.

2. Kassette gemäß Anspruch 1, **dadurch gekennzeichnet, dass** die genannten Scheiben (2, 3) aus Blech sind und dass die genannten Vorsprünge (20) per Tiefziehen des Blechs geformt sind.

3. Kassette gemäß einem der Ansprüche 1 oder 2, **dadurch gekennzeichnet, dass** der zentrale Teil jeder der genannten Scheiben (2, 3) wenigstens drei Vorsprünge (20) mit einem identischen Zwischenraum zwischen anliegenden Vorsprüngen umfasst.

4. Kassette gemäß einem der Ansprüche 1 bis 3, **dadurch gekennzeichnet, dass** die Entfernung zwischen dem Zentrum jeder Scheibe und jeder der jeweiligen Vorsprünge kleiner als oder gleich der Hälfte des Radius der genannten Scheibe ist.

5. Kassette gemäß einem der Ansprüche 1 bis 4, **dadurch gekennzeichnet, dass** die zwei Scheiben identisch sind.

6. Fertigungsverfahren einer Federkassette gemäß einem der Ansprüche 1 bis 5, **dadurch gekennzeichnet, dass** es die Lieferung von zwei Scheiben (2, 3) und die Herstellung der Vorsprünge in den genannten Scheiben per Tiefziehen umfasst.

7. Kabelwickler oder Federröhre, **dadurch gekennzeichnet, dass** er / sie wenigstens eine Federkassette (1) gemäß einem der Ansprüche 1 bis 5 umfasst.

8. Kabelwickler gemäß Anspruch 7, **dadurch gekennzeichnet, dass** er wenigstens zwei Federkassetten (1, 1') umfasst, die parallel mittels einer Vielzahl von Verbindungsorganen (7) verbunden sind, die die Vorsprünge einer Scheibe einer ersten Kassette gegenüber einer Scheibe einer zweiten, an der ersten anliegenden Kassette verbindet.

9. Wickler gemäß Anspruch 7, **dadurch gekennzeichnet, dass** er wenigstens zwei Federkassetten (1, 1') umfasst, die in Serie mittels eines Verbindungsorgans (6) verbunden sind, das einerseits fest mit den Vorsprüngen verbunden ist, die in dem zentralen Teil einer Scheibe eine Kassette und andererseits der inneren Wicklung einer Feder einer anliegenden Kassette angeordnet sind.

## Claims

1. Spring cassette (1) comprising:
- two parallel discs (2, 3) rigidly connected to one another via their periphery,
- a coiled spring (5) held between said discs (2, 3), the outer coil of said spring (5) being rigidly attached to the periphery of said discs,
**characterised in that** each of said discs (2, 3) has, in a central portion, at least two protrusions (20) extending towards the outside of the cassette, with the protrusions (20) of a disc (2, 3) of the spring cassette (1) being configured to be pressed onto at least one connecting part (6, 7) making it possible to connect between them said spring cassette (1) and another identical spring cassette (1').

2. Cassette according to claim 1, **characterised in that** said discs (2, 3) are made of sheet metal and **in that** said protrusions (20) are formed by stamping the sheet metal.

3. Cassette according to one of claims 1 or 2, **characterised in that** the central portion of each one of said discs (2, 3) comprises at least three protrusions (20) with an identical interval between adjacent protrusions.

4. Cassette according to one of claims 1 to 3, **characterised in that** the distance between the centre of each disc and each one of the respective protrusions is less than or equal to half of the radius of said disc.

5. Cassette according to one of claims 1 to 4, **characterised in that** the two discs are identical.

6. Method for manufacturing a spring cassette according to one of claims 1 to 5, **characterised in that** it comprises the supplying of two discs (2, 3) and the realisation of protrusions in said discs by stamping.

7. Spring winder for a cable or tube, **characterised in that** it comprises at least one spring cassette (1) according to one of claims 1 to 5.

8. Winder according to claim 7, **characterised in that** it comprises at least two spring cassettes (1, 1') connected in parallel by means of a plurality of connecting members (7) rigidly connecting the protrusions of a disc of a first cassette facing a disc of a second cassette adjacent to the first.

9. Winder according to claim 7, **characterised in that** it comprises at least two spring cassettes (1, 1') connected in series by means of a connecting member (6) rigidly connected on the one hand to protrusions arranged in the central portion of a disc of a cassette and on the other hand to the inside coil of a spring of an adjacent cassette.
